# EUROPEAN PATENT APPLICATION

(11) **EP 3 396 966 A1**
(43) Date of publication of application: **31.10.2018**
(21) Application number: 17168008.5
(22) Date of filing: 25.04.2017
(51) Int. Cl.: H04N 21/44, H04N 5/21, H04N 5/44, H04B 1/10, H04B 17/20, H04N 21/418, H04N 21/426, H04N 21/436

(54) **CIRCUIT FOR ADAPTIVE TRANSPORT STREAM**

(71) Applicant: Vestel Elektronik Sanayi ve Ticaret A.S., 45030 Manisa (TR)
(72) Inventor: KIRAZ, Alp, 45030 Manisa (TR); EGEMEN, Tufan, 45030 Manisa (TR)
(74) Representative: Ascherl, Andreas

(57) **Abstract**

The present invention refers to a circuit system for adaptive transport stream preferably comprises of a common interface (CI) module (6b), at least one RF antenna (1), at least one RF tuner (2), at least one demodulator block (3), a system SOC (8) and an electronic imaging device. The system further includes a system controller (10), parallel capacitors (5), series resistors (4), and switch blocks (13). The parallel capacitors (5) and the series resistors (4) are placed in output and input of the CI module (6b). The system SOC (8) includes a mosaic detector block (9) configured for checking whether the transport stream data (7) contains any mosaic or not. The CI module (6b) can transfer transport stream (TS) data (7) to the mosaic detector block (9). The system controller (10) can control the switch blocks (13) to add or remove the parallel capacitors (5) and/or the series resistors (4) until the elimination of mosaics in the transport stream data (7) in case of presence of mosaic.

## Description

This invention refers to a circuit system for adaptive transport stream according to claim 1, and a method thereof according to claim 12.

### Background of the Invention

Mosaics appear in a video stream as big squares, where all pixels within one square have the same color. The reason for the presence of mosaic may be of low resolution, weak signal strength, noise or distortion of signal at the receiving end. The mosaics can be eliminated in the video by hardware or software means or combination of these two.

In current situations, all TV manufacturers should check, all common interface (CI) modules that are available in the market for providing better quality video streaming. The TV manufactures has to adjust all possible settings for these modules one by one before the manufacturing stage. But of course there can be still different modules in the market, which may create mosaic in the video.

The subject-matter of prior arts does not provide a single circuit system for eliminating mosiacs that can be adapted for all common interface (CI) modules.

### Object of the Invention

It is therefore the object of the present invention to provide a system, in particular a circuit system for adaptive transport stream and a method that can be adapted for any common interface (CI) module in any electronic imaging device compared to the known devices and methods.

### Description of the Invention

The before mentioned object is solved by a circuit system for adaptive transport stream according to claim 1. The circuit system or system for adaptive transport stream according to the present invention preferably comprises of a common interface (CI) module, at least one RF antenna, at least one RF tuner, at least one demodulator block, a system SOC and an electronic imaging device. The system further includes a system controller, parallel capacitors, series resistors, and switch blocks. The parallel capacitors and the series resistors are placed in output and input of the CI module. The system SOC includes a decoder block and that includes a mosaic detector block. The CI module can transfer transport stream (TS) data to the mosaic detector block. The mosaic detector block can be configured for checking whether the transport stream data contains any mosaic or not.

The circuit system for adaptive transport stream according to the present invention the system controller can control the switch blocks to add or remove the parallel capacitors and/or the series resistors until the elimination of mosaics in the transport stream data in case of presence of mosaic that is identified by the mosaic detector block.

This solution is beneficial since the circuit system for adaptive transport stream according to the present invention can be used for any common module interface without changing the design of the electronic imaging device.

Further preferred embodiments are subject-matter of dependent claims and/or of the following specification parts.

According to a preferred embodiment of the present invention, the transport stream signal can be transferred to the electronic imaging device with different frequency and shape for each CI module. The RF signal is received from the RF antenna and converted to TS signals through RF Tuner and demodulator block. The TS signals can be passed to the decoder block of the system SOC through the CI module. The change in signal strength and timings for the CI module and the decoder block loading generates mosaics on the display screen. The CI module can transfers the transport stream data to a display screen of the electronic imaging device directly in the absence of mosaic.

According to a further preferred embodiment of the present invention, the parallel capacitors and the series resistors controlled by the system controller by controlling the switch blocks. The switch blocks can activate clock signals to increase or decrease the signal timings and signal strength for the added parallel capacitors and series resistors in the CI module input and output transport stream lines. The parallel capacitors and series resistors settings are saved as a GPIO setting (General purpose input output setting) in a non-volatile memory of the system for the specific CI module. The GPIO setting can be retrieved from the memory even after removal of the same CI module and when the same CI module installed again. The number of series resistors, parallel capacitors and switch blocks can be altered according to the system requirement for eliminating the mosaics in the TS data.

The before mentioned object is also solved by a method for transmitting adaptive transport stream according to claim 12. Said method preferably comprises the steps: transferring RF signal from RF antenna to RF tuner and demodulator block for converting the RF signal into transport stream (TS) data, transferring TS data from the demodulator to a common interface (CI) module, checking for presence of mosaic in the TS data, adding and / or removing series resistors and/or parallel capacitors in the TS data line of input and output of the CI module in case mosaic is detected, checking again for the presence of mosaic in the TS data, repeating adding and / or removing series resistors and/or parallel capacitors in the TS data line until absence of the mosaic, passing the TS data to the display screen in the absence of the mosaic, and saving series resistor and parallel capacitor settings or GPIO setting for the specific CI module in the non-volatile memory.

Further benefits, goals and features of the present invention will be described by the following specification of the attached figures, in which components of the invention are exemplarily illustrated. Components of the devices and method according to the inventions, which match at least essentially with respect to their function can be marked with the same reference sign, wherein such components do not have to be marked or described in all figures.

The invention is just exemplarily described with respect to the attached figures in the following.

### Brief Description of the Drawings

- Fig. 1: illustrates the block diagram of a system for adaptive transport stream according to an embodiment of the present invention;
- Fig. 2: illustrates the block diagram of a control for series resistors and parallel capacitors according to an embodiment of the present invention; and
- Fig. 3: illustrates a method for transmitting adaptive transport stream in an electronic imaging device according to an embodiment of the present invention.

### Detailed Description of the Drawings

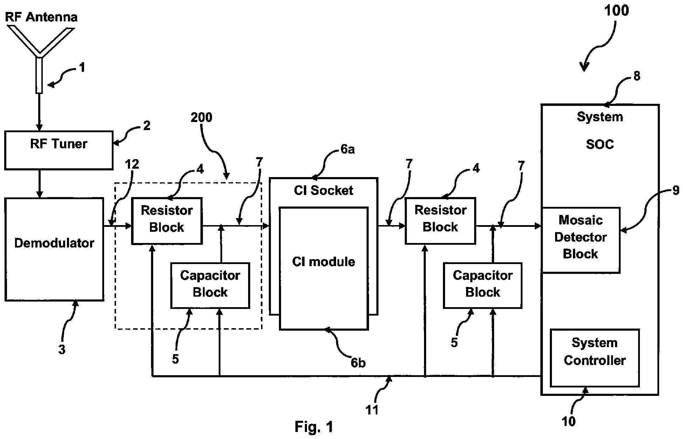

Fig. 1 illustrates the block diagram 100 of a system for adaptive transport stream according to an embodiment of the present invention. The system for adaptive transport stream preferably comprises of a common interface (CI) socket 6a, a RF antenna 1, a RF tuner 2, a demodulator block 3, a system SOC 8 and an electronic imaging device. The common interface socket 6a includes a common interface module 6b. The system further includes a system controller 10, parallel capacitor blocks 5 and series resistor block 4. The parallel capacitor block 5 and the series resistor block 4 are placed in output and input of the CI module 6b. The system SOC 8 includes a decoder block and that includes a mosaic detector block 9. The CI module 6b can transfer transport stream (TS) data 7 to the mosaic detector block 9. The mosaic detector block 9 can be configured for checking whether the transport stream data 7 contains any mosaic or not.

According to the preferred embodiment of the present invention, the system controller 10 can control mosaic elimination by adding or removing the parallel capacitors 5 and/or the series resistors 4 in the transport stream data 7 in case of presence of mosaic is identified by the mosaic detector block 9. If the TS data 7 may not contain any mosaic then the TS data 7 is directly transferred to the display screen of the electronic imaging device. Further, the circuit system for adaptive transport stream can be used for any common module 6b interface of the electronic imaging device without changing the design entirely.

According to a preferred embodiment of the present invention, the transport stream signal can be transferred to the electronic imaging device with different frequency and shape for each CI module 6b. The RF signal is received from the RF antenna and converted to TS signals through RF tuner 2 and demodulator block 3. The TS signals can be passed to the decoder block of the system SOC 8 through the CI module 6b. The change in signal strength and timings for the CI module 6b and the decoder block loading generates mosaics on the display screen. The CI module 6b can transfers the transport stream data 7 to a display screen of the electronic imaging device directly in the absence of mosaic.

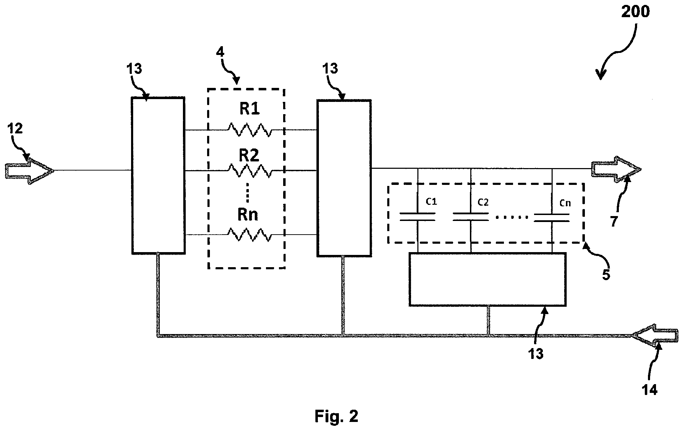

Fig. 2 illustrates the block diagram 200 of a control for series resistors 4 and parallel capacitors 5 according to an embodiment of the present invention. The system further comprises of switch blocks 13 for adding and/ or removing the series resisitor 4 and / or parallel capacitor 5 in the input and output TS data line 7 of the CI module 6b. The series resistor block 4 includes a set of resistor that can be added in series to the TS data line 7. The parallel capacitor block 5 includes a set of capacitor that can be added in parallel to the TS data line 7. The resistors are added in series with the TS data line 7 and capaciotrs are added in parallel to the TS data line 7 acording to the requirement. At input side of the CI module 6b, the capacitor block 5 and resistor block 4 can be connected in between the CI module 6b and the output of the demodulator block 3. Similarly, at output side of the CI module 6b, the capacitor block 5 and resistor block 4 can be connected in between the CI module 6b and the output of the mosaic detector block 9.The parallel capacitors 5 and the series resistors 4 are controlled by the system controller 10 through the switch blocks 13. A set of GPIO 11 control signal 14 sent by the system controller 10 to activate the clock signal for the switch blocks. The switch blocks 13 can activate clock signals to increase or decrease the signal timings and signal strength for the added parallel capacitors 5 and series resistors 4 in the CI module 6b input and output transport stream lines.

According to an embodiment of the present invention, the parallel capacitors 5 and series resistors 4 settings are saved as a GPIO 11 setting (General purpose input output setting) in a non-volatile memory of the system for the specific CI module 6b. The GPIO 11 setting can be retrieved from the memory even after removal of the same CI module 6b and when the same CI module 6b installed again. The number of series resistors 4, parallel capacitors 5 and switch blocks 13 can be altered according to the system requirement for eliminating the mosaics in the TS data 7.

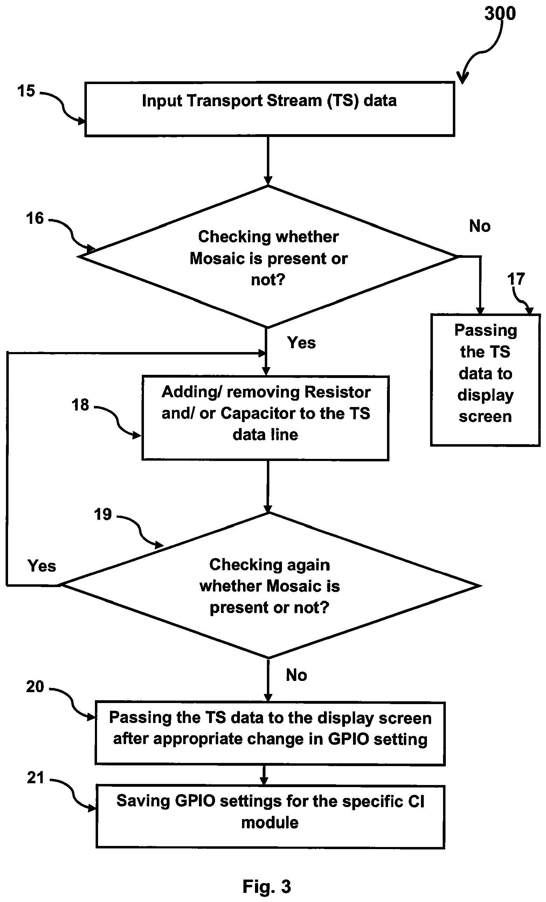

Fig. 3 illustrates a method 300 for transmitting adaptive transport stream in an electronic imaging device according to an embodiment of the present invention. The method for transmitting adaptive transport stream in an electronic imaging device comprising the steps of: providing input Transport Stream (TS) data 7 to the CI module 6b 15, checking whether mosaic is present or not 16 using the mosaic detector block 9. In case if there is no mosaic present then, the TS data 7 can be passed to the display screen 17 of the electronic imaging device. In case if there is any mosaic detected then series resistor 4and/ or capacitor can be added / removed to/from the TS data 7 line 18. After the addition or removal of resistor and capacitor that is appropriate change in GPIO 11 setting, again the presence of mosaic is checked 19. If there is no mosaic present in the TS data 7, then the GPIO 11 settings are saved for the specific CI module 20. The GPIO 11 settings can be retrieved from the non-volatile memory of the system for the same CI module 6b according to the requirement. In case if the TS data 7 contains mosaic means then again repeatedly the GPIO 11 settings can be changed for removing the mosaic in the TS data 7.

Thus, the present invention refers to a circuit system for adaptive transport stream preferably comprises of a common interface (CI) module 6b, at least one RF antenna 1, at least one RF tuner 2, at least one demodulator block 3, a system SOC 8 and an electronic imaging device. The system further includes a system controller 10, parallel capacitors 5, series resistors 4, and switch blocks 13. The parallel capacitors 5 and the series resistors 4 are placed in output and input of the CI module 6b. The system SOC 8 includes a mosaic detector block 9 configured for checking whether the transport stream data 7 contains any mosaic or not. The CI module 6b can transfer transport stream (TS) data 7 to the mosaic detector block 9. The system controller 10 can control the switch blocks 13 to add or remove the parallel capacitors 5 and/or the series resistors 4 until the elimination of mosaics in the transport stream data 7 in case of presence of mosaic.

### List of reference numbers

- 1: RF antenna
- 2: RF tuner
- 3: demodulator block
- 4: resistor block or series resistors
- 5: capacitor block or parallel capacitors
- 6a: common interface (CI) socket
- 6b: common interface (CI) module
- 7: transport stream (TS) line or TS data
- 8: system SOC
- 9: mosaic detector block
- 10: system controller
- 11: GPIO for control
- 12: output from the demodulator block
- 13: switch block
- 14: control signal or output from the system controller
- 15: Input Transport Stream (TS) data
- 16: Checking whether Mosaic is present or not
- 17: Passing the TS data to display screen
- 18: Adding/ removing Resistor and/ or Capacitor to the TS data line
- 19: Checking again whether Mosaic is present or not after appropriate change in GPIO setting
- 20: Saving GPIO settings for the specific CI module
- 100: block diagram of a system for adaptive transport stream
- 200: block diagram of a control for series resistors and parallel capacitors
- 300: a method for transmitting adaptive transport stream in an electronic imaging device

## Claims

1. A circuit system for adaptive transport stream comprises of,
a common interface (CI) module (6b), at least one RF antenna (1), at least one RF tuner (2), at least one demodulator block (3), a system SOC (8) and an electronic imaging device;
**characterized in that**
the system further includes a system controller (10), parallel capacitors (5), series resistors (4), and switch blocks (13);
wherein the parallel capacitors (5) and the series resistors (4) are placed in output and input of the CI module (6b);
wherein the system SOC (8) includes a decoder block; wherein the decoder block includes a mosaic detector block (9);
wherein the CI module (6b) transfers transport stream (TS) data (7) to the mosaic detector block (9);
wherein the mosaic detector block (9) configured for checking whether the transport stream data (7) contains any mosaic or not; and
wherein the system controller (10) controls the switch blocks (13) to add or remove
the parallel capacitors (5) and/or the series resistors (4) until the elimination of mosaics in the transport stream data (7) in case of presence of mosaic is identified by
the mosaic detector block (9).

2. The circuit system of claim 1, wherein the transport stream signal sent to the electronic imaging device with different frequency and shape for each CI module (6b).

3. The circuit system of claim 1, wherein RF signal taken from the RF antenna (1) and converted to TS signals through RF tuner (2) and demodulator block (3).

4. The circuit system of claim 1, wherein the TS signals passed to the decoder block of the system SOC (8) through the CI module (6b).

5. The circuit system of claim 1, wherein change in signal strength and timings for the CI module (6b) and the decoder block loading generates mosaics on the display screen; and wherein the mosaics detected by the mosaic detector block (9).

6. The system of claim 1, wherein the CI module (6b) transfers the transport stream data (7) to a display screen of the electronic imaging device directly in the absence of mosaic.

7. The circuit system of claim 1, wherein the switch blocks (13) activate clock signals to increase or decrease the signal timings and signal strength for the added parallel capacitors (5) and series resistors (4) in the CI module (6b) input and output transport stream lines.

8. The circuit system of claim 1, wherein the parallel capacitors (5) and the series resistors (4) controlled by the system controller (10) by controlling the switch blocks (13).

9. The circuit system of claim 1, wherein the parallel capacitors (5) and series resistors (4) settings are saved as a GPIO (11) setting in a non-volatile memory of the system for the specific CI module (6b).

10. The circuit system of claim 9, wherein the GPIO (11) setting retrieved from the memory even after removal of the same CI module (6b) and installed again.

11. The circuit system of claim 1, wherein the number of series resistors (4), parallel capacitors (5) and switch blocks (13) altered according to the system requirement.

12. A method for transmitting adaptive transport stream in an electronic imaging device comprising the steps of,
transferring RF signal from RF antenna (1) to RF tuner (2) and demodulator block (3) for converting the RF signal into transport stream (TS) data (7);
transferring TS data (7) from the demodulator to a common interface (CI) module (6b);
checking for presence of mosaic in the TS data (7);
adding and / or removing series resistors (4) and/or parallel capacitors (5) in the TS data line (7) of input and output of the CI module (6b) in case mosaic detected; checking again for the presence of mosaic in the TS data (7);
repeating adding and / or removing series resistors (4) and/or parallel capacitors (5) in the TS data line (7) until absence of the mosaic;
passing the TS data (7) to the display screen in the absence of the mosaic; and saving series resistors (4) and parallel capacitors (5) settings for the specific CI module (6b) in the non-volatile memory.
